# DEMANDE DE BREVET EUROPEEN

(11) **EP 2 532 988 A1**
(43) Date de publication de la demande: **12.12.2012**
(21) Numéro de dépôt: 12168999.6
(22) Date de dépôt: 23.05.2012
(51) Int. Cl.: F24J 2/52

(54) **Ensemble modulaire pour lier au moins un panneau solaire à une toiture et procédé pour installer un tel ensemble modulaire**

(30) Priorité: 07.06.2011 FR 1154957
(71) Demandeur: Solar Construct, 69560 Sainte-Colombe (FR)
(72) Inventeur: Liegeon, Eric, 69560 Ste Colombe (FR); Poirier, Guillaume, 38722 Cour et Buis (FR)
(74) Mandataire: Chevalier, Renaud Philippe

(57) **Abrégé**

Cet ensemble modulaire (1) comprend des profilés (11) plus long que la distance entre deux ondes (3). Chaque profilé (11) présente deux faces opposées avec :
- une rainure primaire longitudinale près du bac acier (2) ; et
- une succession de rainures secondaires (12.2, 13.2) longitudinales et agencées à distance croissante du bac acier (2).

L'ensemble modulaire (1) comprend des socles (21) comportant des ailettes élastiquement déformables avec languettes primaires adaptées pour encliquetage sur une rainure primaire. L'ensemble modulaire (1) comprend une embase (31) comportant une semelle reposant sur le bac acier (2) et deux ailes élastiquement déformables avec des languettes secondaires adaptée pour encliquetage sur une rainure secondaire.

## Description

La présente invention concerne un ensemble modulaire pour lier au moins un panneau solaire à une toiture recouverte d'un bac acier. Par ailleurs, la présente invention concerne un procédé pour installer un tel ensemble modulaire sur une toiture recouverte d'un bac acier existant ou neuf.

La présente invention trouve notamment application dans le domaine de la fabrication et de l'installation d'ensembles modulaires pour panneaux solaires et, plus généralement, dans le domaine de la conception et de l'installation sur une toiture d'un champ de panneaux solaires, de type phovoltaïque ou thermique.

Un bac acier a généralement des ondes qui s'étendent suivant la pente de la toiture et qui sont séparées, suivant une direction longitudinale, par des creux d'ondes présentant une ou plusieurs surface(s) globalement plane(s). Les creux d'ondes peuvent aussi présenter un ou deux bosselage(s) qui s'étend(ent) suivant la pente de la toiture et entre deux surfaces planes.

Dans l'art antérieur, un ensemble modulaire pour lier des panneaux solaires à une toiture avec bac acier comprend généralement une série de poutres parallèles qui supportent les panneaux solaires. Les poutres sont liées à la toiture par l'intermédiaire de composants de fixation qui sont solidarisés au bac acier. Les composants de fixation ont notamment pour fonction de transmettre à la toiture le poids des panneaux solaires.

Cependant, un ensemble modulaire de l'art antérieur transmet les efforts, ascendants et descendants, exercés sur les panneaux solaires au bac acier de manière localisée, par exemple seulement au niveau des ondes. Une telle transmission risque d'altérer la structure du bac acier et/ou de l'ensemble modulaire, donc de réduire sa durée de service.

En outre, chaque composant de fixation a des dimensions spécifiques à un type particulier de bac acier, pour s'adapter par exemple à la distance séparant deux ondes successives, à la hauteur des ondes par rapport aux creux d'ondes, au nombre de bosselages entre deux ondes etc. Il est donc nécessaire de prévoir autant de modèles de composants de fixation qu'il y a de types de bac acier.

La présente invention vise notamment à résoudre, en tout ou partie, les problèmes mentionnés ci-avant.

A cet effet, l'invention a pour objet un ensemble modulaire, pour lier au moins un panneau solaire à une toiture recouverte d'un bac acier ayant des ondes séparées, suivant une direction longitudinale, par des creux d'ondes qui présentent une surface globalement plane, l'ensemble modulaire comprenant :
- au moins un profilé dont la longueur est supérieure à la distance usuelle entre deux ondes successives, le profilé présentant deux faces longitudinales ayant des orientations opposées et comprenant chacune :
   - une rainure primaire s'étendant parallèlement à la direction longitudinale et agencée près du bac acier ; et
   - une succession de plusieurs rainures secondaires s'étendant parallèlement à la direction longitudinale et agencées à distance croissante du bac acier ;
- au moins deux socles adaptés pour être fixés sur deux ondes respectives et successives, chaque socle comportant au moins deux ailettes qui sont élastiquement déformables et qui s'étendent parallèlement à la direction longitudinale, chaque ailette comprenant au moins une languette primaire adaptée pour encliquetage élastique sur l'une desdites rainures primaires de façon à lier un profilé respectif à chacun desdits socles ; et
- au moins une embase adaptée pour être positionnée sur un creux d'ondes, l'embase comportant une semelle agencée pour reposer sur le bac acier, l'embase comportant au moins deux ailes qui sont élastiquement déformables et qui s'étendent parallèlement à la direction longitudinale, chaque aile comprenant au moins une languette secondaire adaptée pour encliquetage élastique sur l'une desdites rainures secondaires de façon à lier un profilé respectif à une embase respective.

Ainsi, un effort ascendant exercé sur les panneaux solaires est transmis à une onde par chaque socle, et un effort descendant exercé sur les panneaux solaires est réparti sur un creux d'ondes par une embase respective. On réalise ainsi une liaison en « trois points » ou plus de l'ensemble modulaire sur la toiture et son bac acier.

Dans la présente demande, les termes « longitudinal » et « longueur » se rapportent à une direction perpendiculaire aux ondes, donc perpendiculaire à la pente de la toiture. Les longueurs sont mesurées suivant une direction longitudinale. Dans la présente demande, le terme « face longitudinale » s'applique à une face s'étendant parallèlement à la direction longitudinale. Dans la présente demande, le terme « profilé » désigne un tronçon de profilé. Dans la présente demande, le terme « usuelle » s'applique à une distance mesurée entre deux ondes successives sur tous les types de bac acier. En pratique, la distance dite usuelle correspond à la distance maximale supérieure pour le bac acier présentant deux ondes successives.

Ainsi, comme un tel profilé a une géométrie constante sur sa longueur et comme il comprend une succession de rainures secondaires, un profilé respectif permet d'adapter un même ensemble modulaire à tout type de bac acier, quelles qu'en soient les dimensions, en particulier la hauteur de ses ondes et l'intervalle entre deux ondes successives. Un ensemble modulaire conforme à l'invention permet donc de lier des panneaux solaires à un bac acier existant ou à un bac acier neuf.

Selon un mode de réalisation, un ensemble modulaire selon l'invention comprend en outre :
- au moins deux poutres s'étendant transversalement à la direction longitudinale ; et
- plusieurs équerres de fixation adaptées chacune pour fixer une poutre respective à un profilé respectif.

Ainsi, de telles poutres permettent de supporter directement les panneaux solaires.

Selon un mode de réalisation, un ensemble modulaire selon l'invention comprend en outre des organes de fixation comprenant une partie de liaison à une poutre respective et une partie d'accrochage adaptée pour accrocher au moins un panneau solaire.

Ainsi, de tels organes de fixation permettent, par exemple par vissage ou crochetage, de fixer aisément et rapidement chaque panneau solaire sur l'ensemble modulaire.

Selon un mode de réalisation, chaque languette primaire est agencée pour coopérer avec une rainure primaire de sorte que le profilé respectif transmet au socle respectif des efforts exercés dans un sens sensiblement ascendant et sur au moins un panneau solaire.

Dans la présente demande, le terme « ascendant » se rapporte au sens ascendant d'une normale à la toiture, globalement du sol vers le ciel. Inversement, dans la présente demande, le terme « descendant » se rapporte au sens descendant d'une normale à la toiture, globalement du ciel vers le sol.

Ainsi, les socles avec leurs languettes primaires permettent de maintenir un profilé en place parallèlement au bac acier et de reprendre des efforts ascendants, par exemple la charge du vent exercée sur la face inférieure des panneaux solaires.

Selon un mode de réalisation, chaque languette secondaire est agencée pour coopérer avec une rainure secondaire de sorte que le profilé respectif transmet à l'embase des efforts exercés dans un sens sensiblement descendant et sur au moins un panneau solaire.

Ainsi, une embase et ses languettes secondaires permettent de reprendre le poids des panneaux solaires et de le transmettre à la structure du bâtiment.

Selon un mode de réalisation, un ensemble modulaire selon l'invention comprend deux embases pour un profilé respectif.

Ainsi, de telles embases permettent de supporter un poids important de panneaux solaires. De plus, de telles embases permettent d'adapter l'ensemble modulaire à des ondes relativement éloignées, ce qui est par exemple le cas lorsqu'il y a deux bosselages entre deux ondes successives.

Selon un mode de réalisation, un ensemble modulaire selon l'invention comprend une embase pour un profilé respectif.

Ainsi, une telle embase permet d'adapter l'ensemble modulaire à des ondes relativement proches, ce qui est par exemple le cas lorsqu'il y a un seul bosselage entre deux ondes successives.

Selon un mode de réalisation, chaque languette secondaire est disposée à l'extrémité de chaque aile.

Ainsi, une telle position de chaque languette secondaire limite l'encombrement de l'embase, en particulier en hauteur.

Selon un mode de réalisation, les deux faces longitudinales opposées d'un profilé sont parallèles et orientées vers l'extérieur du profilé.

Ainsi, un tel profilé peut être aisément inséré entre les languettes primaires et secondaires, qui coopèrent avec les faces longitudinales externes du profilé.

Selon un mode de réalisation, la succession de rainures secondaires comprend au moins quatre rainures secondaires juxtaposées.

Ainsi, une telle succession de rainures secondaires permet d'adapter l'ensemble modulaire à une grande variété de hauteurs d'ondes possibles, donc à une grande variété de bacs acier.

Selon un mode de réalisation, chaque rainure secondaire a une section transversale triangulaire, la succession des rainures secondaires formant des dents de scie.

Ainsi, une telle rainure secondaire permet un encliquetage élastique aisé.

Selon un mode de réalisation, chaque socle est un tronçon de profilé à section transversale globalement en U et présentant un plateau, le profilé comportant des patins adaptés pour reposer sur le plateau.

Ainsi, de tels socles en U présentent un logement pour recevoir la partie basse d'un profilé.

Selon un mode de réalisation, les languettes primaires s'étendent sur une partie substantielle, de préférence sur la totalité, de la longueur d'un socle respectif, et les languettes secondaires s'étendent sur une partie substantielle, de préférence sur la totalité, de la longueur d'une embase respective.

Ainsi, avec de telles dimensions, les languettes primaires et les languettes secondaires peuvent reprendre ou transmettre aux rainures primaires et secondaires des efforts relativement importants.

Selon un mode de réalisation, le profilé a une section transversale creuse et globalement rectangulaire.

Ainsi, une telle section confère au profilé une résistance mécanique élevée pour un poids relativement faible.

Par ailleurs, la présente invention a pour objet un procédé, pour installer un ensemble modulaire selon l'invention sur une toiture recouverte d'un bac acier ayant des ondes séparées, suivant une direction longitudinale, par des creux d'ondes qui présentent une surface globalement plane, le procédé comprenant les étapes :
- fixer les deux socles sur deux ondes respectives et successives ;
- positionner au moins une embase sur une surface globalement plane d'un creux d'ondes, la semelle reposant sur le bac acier ;
- lier un profilé respectif à chacun desdits socles ; et
- lier le profilé à une embase respective.

Ainsi, un tel procédé permet d'installer un champ de panneaux solaires sur une toiture, de manière aisée, rapide et fiable. De plus, un tel procédé permet d'adapter l'ensemble modulaire à diverses dimensions de bac acier.

Selon un mode de réalisation, un procédé selon l'invention comprend en outre les étapes :
- ôter des vis de fixation du bac acier sur une panne sous-jacente ;
- fixer les socles sur deux ondes respectives au moyen de vis de réparation et, de préférence, d'une rondelle élastique disposées aux emplacements des vis de fixation ;
- positionner chaque embase respective dans un creux d'ondes ; et
- fixer une poutre respective transversalement à la direction longitudinale au moyen de plusieurs équerres de fixation.

Ainsi, de telles étapes permettent de fixer rapidement sur la toiture les socles, les embases et les poutres de l'ensemble modulaire. En particulier, on peut faire descendre le profilé manuellement ou mécaniquement en contact d'un creux d'ondes.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective d'un profilé appartenant à un ensemble modulaire conforme à l'invention ;
- la figure 2 est une vue similaire à la figure 1 d'un socle appartenant à un ensemble modulaire conforme à l'invention ;
- la figure 3 est une vue similaire à la figure 1 d'une embase appartenant à un ensemble modulaire conforme à l'invention ;
- la figure 4 est une vue en perspective, suivant un angle différent de la figure 1, de deux socles selon la figure 2 et illustrant une étape d'un procédé conforme à l'invention ;
- la figure 5 est une vue similaire à la figure 4 d'une partie de l'ensemble modulaire de la figure 1 et illustrant une autre étape d'un procédé conforme à l'invention ;
- la figure 6 est une vue en perspective, suivant un angle différent de la figure 4, d'une partie de l'ensemble modulaire de la figure 1 et illustrant une autre étape d'un procédé conforme à l'invention ;
- la figure 7 est une vue en perspective, suivant un angle différent de la figure 6, de la partie de l'ensemble modulaire de la figure 6 ;
- la figure 8 est une vue en perspective d'une partie de l'ensemble modulaire de la figure 6 et illustrant une autre étape d'un procédé conforme à l'invention ;
- la figure 9 est une vue en perspective d'une partie de l'ensemble modulaire de la figure 6 et illustrant une autre étape d'un procédé conforme à l'invention ;
- la figure 10 est une vue en perspective d'un organe de fixation appartenant à l'ensemble modulaire de la figure 6 ;
- la figure 11 est une vue en perspective d'une partie de l'ensemble modulaire de la figure 1 et illustrant un état assemblé de l'ensemble modulaire de la figure 6 avec des panneaux solaires ; et
- la figure 12 est une vue en perspective, suivant un angle différent de la figure 1, d'une toiture liée à l'ensemble modulaire de la figure 6 dans l'état assemblé de la figure 11.

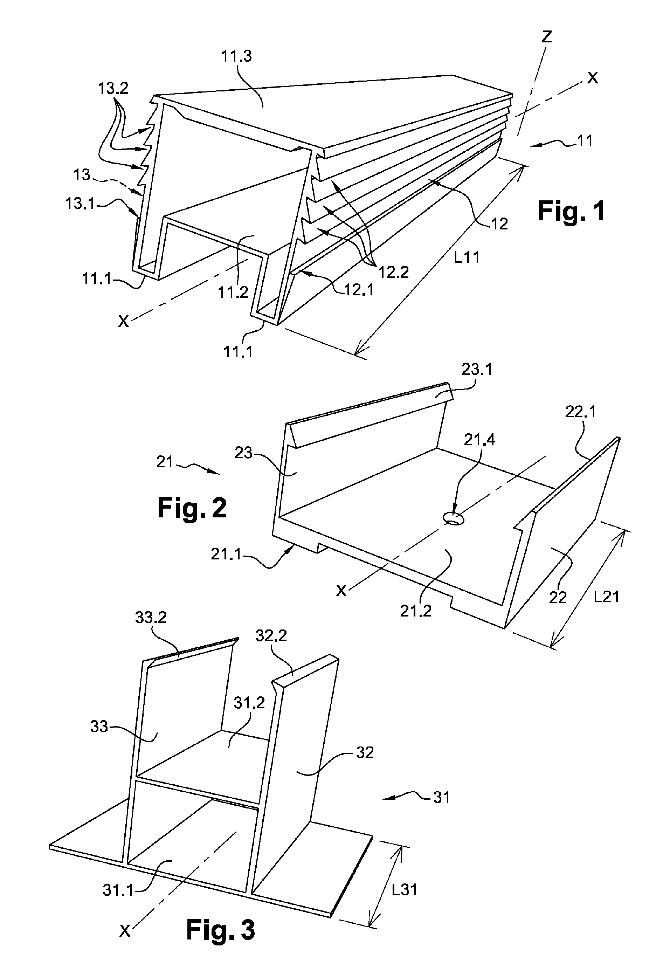

La figure 1 illustre un composant d'un ensemble modulaire 1 conforme à l'invention, à savoir un tronçon de profilé ou profilé 11 qui s'étend parallèlement à une direction longitudinale X. Le profilé 11 a une section transversale creuse et globalement rectangulaire.

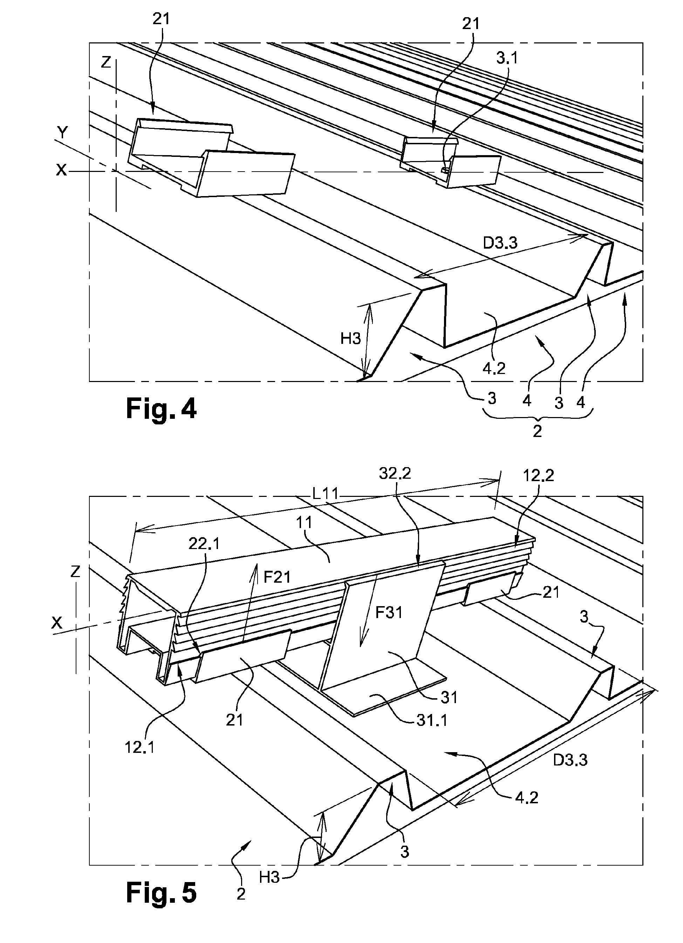

Le profilé 11 comporte deux patins 11.1 reliés par un plateau central 11.2. Les patins 11.1 sont destinés à être disposés du côté d'un bac acier 2 visible à la figure 5. Le profilé 11 est réalisé par extrusion ou moulage d'un alliage aluminium ou d'un matériauplastique de synthèse.

Le profilé 11 présente deux faces longitudinales 12 et 13 qui ont des orientations opposées. Les faces longitudinales 12 et 13 sont reliées par un plateau supérieur 11.3. En l'occurrence, les faces longitudinales 12 et 13 sont parallèles et orientées vers l'extérieur du profilé 11.

Les faces longitudinales 12 et 13 comprennent chacune :
- une rainure primaire 12.1 ou 13.1 s'étendant parallèlement à la direction longitudinale X et agencée près des patins 11.1, donc près du bac acier 2 ; et
- une succession de rainures secondaires 12.2 et 13.2 s'étendant parallèlement à la direction longitudinale X et agencées à distance croissante des patins 11.1, donc du bac acier 2, suivant une direction normale Z perpendiculaire au bac acier 2 et à la direction longitudinale X.

La succession de rainures secondaires comprend ici quatre rainures secondaires 12.2 ou 13.2 juxtaposées. Chaque rainure secondaire 12.2 ou 13.2 a une section transversale triangulaire. La succession des rainures secondaires 12.2 forme des dents de scie égoïne.

La figure 2 illustre un socle 21 comportant deux ailettes 22 et 23 et un plateau médian 21.2 qui relie les ailettes 22 et 23. Le socle 21 est un tronçon de profilé à section transversale en U ou en rectangle ouvert sur un côté. La surface inférieure 21.1 du plateau central 21.2 est plane de façon à reposer contre une onde, comme le montre la figure 4.

Chaque socle est un tronçon de profilé à section transversale globalement en U et présentant une surface plane.

Les ailettes 22 et 23 sont élastiquement déformables. Les ailettes 22 et 23 s'étendent parallèlement à la direction longitudinale X. Le socle 21 est réalisé par extrusion ou moulage d'un alliage d'aluminium ou d'un matériau plastique de synthèse.

Chaque ailette 22 ou 23 comprend une languette primaire 22.1 ou 23.1 adaptée pour son encliquetage élastique sur l'une des rainures primaires 12.1 ou 13.1 de façon à lier un profilé 11 respectif à des socles de type 21. Les languettes primaires 22.1 ou 23.1 s'étendent sur la totalité de la longueur L21 du socle 21, mesurée parallèlement à la direction longitudinale X.

La figure 3 illustre une embase 31 qui comporte une semelle 31.1 agencée pour reposer sur le bac acier 2, comme le montre la figure 5. L'embase 31 comporte deux ailes 32 et 33 qui sont élastiquement déformables. L'embase 31 est réalisée par extrusion ou moulage d'un alliage d'aluminium ou d'un matériauplastique de synthèse. Les ailes 32 et 33 sont planes et elles s'étendent parallèlement à la direction longitudinale X. Les ailes 32 et 33 sont reliées par une plaque centrale 31.2.

Chaque aile 32 ou 33 comprend deux languettes secondaires 32.2 et 33.2 adaptée pour encliquetage élastique sur l'une des rainures secondaires 22.2 de façon à lier le profilé 11 à l'embase 31. Chaque languette secondaire 32.2 ou 33.2 s'étend sur la totalité de la longueur L31 de l'embase 31, mesurée parallèlement à la direction longitudinale X. Chaque languette secondaire 32.2 ou 33.2 est disposée à l'extrémité de chaque aile 32 ou 33.

La figure 4 illustre une toiture recouverte d'un bac acier 2 ayant des ondes 3 séparées, suivant la direction longitudinale X, par des creux d'ondes 4. Les ondes 3 s'étendent dans le sens de la pente de la toiture symbolisé par une direction transversale Y à la figure 4. Chaque creux d'ondes 4 présente une surface globalement plane 4.2.

La figure 4 illustre une étape initiale d'un procédé conforme à l'invention, pour installer l'ensemble modulaire 1 sur la toiture recouverte du bac acier 2. Deux socles 21 sont fixés respectivement sur deux ondes 3 successives. Les ondes 3 se succèdent suivant la direction longitudinale X. Les socles 21 sont disposés en alignement parallèlement à la direction longitudinale X.

Chaque socle 21 est adapté pour être fixé sur une onde du bac acier 2. À cet effet, le socle 21 présente un trou 21.4, visible à la figure 2 et à travers lequel peut passer une vis dite de réparation 3.1 serrée sur une panne sous-jacente non représentée de la toiture. Chaque vis de réparation 3.1 est disposée, avec une rondelle élastique par exemple en néoprène® à l'emplacement d'une vis de fixation ôtée du bac acier 2.

La figure 5 illustre une étape subséquente du procédé. Une embase 31 est fixée sur la surface globalement plane 4.2. À cet effet, la semelle 31.1 repose sur le bac acier 2. L'embase 31 est ainsi adaptée pour être positionnée et fixée sur un creux d'ondes 4.

On réalise ainsi une liaison en au moins « trois points » de l'ensemble modulaire 1 sur la toiture et son bac acier 2. De préférence, la surface de contact entre l'embase 31 et le creux d'ondes 4 est relativement importante, ce qui permet de répartir les efforts descendants transmis par l'ensemble modulaire 1 au bac acier 2.

Comme le montre la figure 5, la longueur L11 du profilé 11 est supérieure à la distance D3.3 entre deux ondes 3 successives. Dans l'exemple des figures, l'ensemble modulaire 1 comprend une embase 31 pour un profilé respectif 11. Les patins 11.1 du profilé 11 sont en appui contre le plateau central 11.2.

Comme le montre la figure 5, chaque languette primaire 22.1 et 23.1 coopère avec une rainure primaire respective 12.1 ou 13.1, de sorte que le profilé 11 transmet à chaque socle respectif 21 les efforts exercés dans un sens sensiblement ascendant, suivant la direction Z. Ces efforts sont symbolisés par la flèche F21. En d'autres termes, chaque languette primaire 22.1 et 23.1 évite que le profilé 11 ne se déplace loin du bac acier 2. Ainsi, un profilé respectif 11 est lié à chacun des socles 21.

Comme le montre la figure 5, chaque languette secondaire 32.2 et 33.2 coopère avec une rainure secondaire respective 12.2 ou 13.2, de sorte que le profilé 11 transmet à l'embase 31 les efforts exercés dans un sens sensiblement descendant, suivant la direction Z. Ces efforts sont symbolisés par la flèche F31. En d'autres termes, chaque languette secondaire 32.2 et 33.2 évite que le profilé 11 ne se déplace vers le bac acier 2. Ainsi, un profilé respectif 11 est lié à une embase respective 31.

La succession de rainures secondaires 12.2 et 13.2 permet d'adapter l'ensemble modulaire 1 à une grande variété de hauteurs H3 d'ondes 3 possibles, donc à une grande variété de bacs acier 2. En effet, les languettes secondaires 32.2 et 33.2 peuvent venir en prise ou s'encliqueter avec l'une ou l'autre des rainures secondaires 12.2 et 13.2. Chaque type de bac acier peut présenter une hauteur d'onde spécifique.

De plus, comme le profilé 11, les socles 21 et l'embase 31 sont des éléments profilés, donc à section constante suivant la direction longitudinale X. Un ensemble modulaire conforme à l'invention permet donc d'adapter la position relative de ces composants à divers écartements et à diverses hauteurs des ondes, donc à divers bacs acier. Un ensemble modulaire conforme à l'invention dispense donc de prévoir une large gamme de composants pour lier des panneaux solaires à divers types de bacs acier.

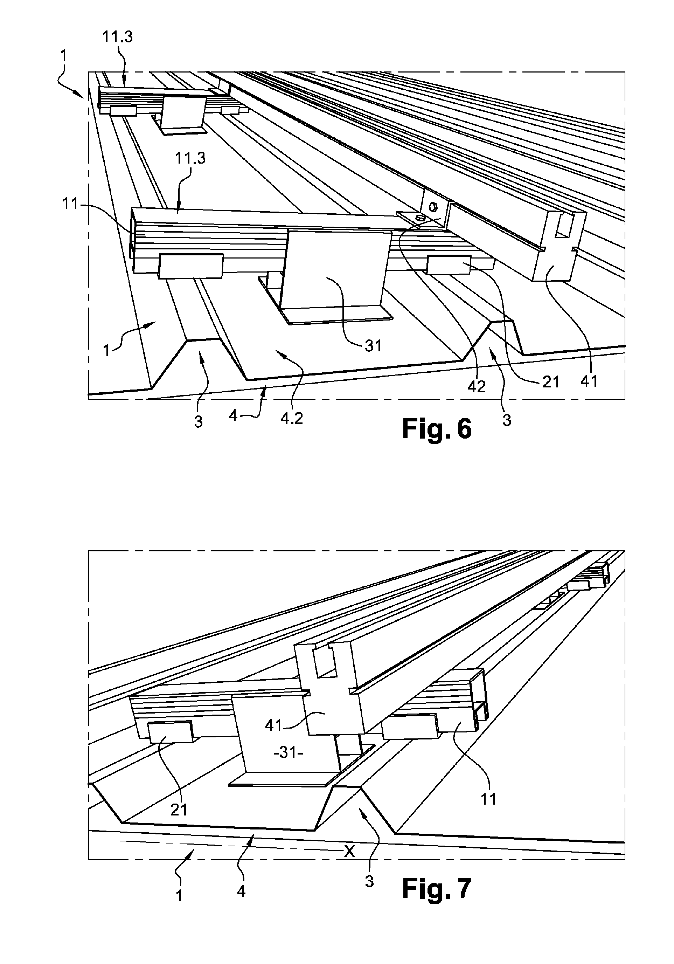

Comme le montrent les figures 6 et 7, l'ensemble modulaire 1 comprend en outre des poutres 41 et des équerres de fixation 42, qui sont adaptées chacune pour fixer une poutre respective 41 à un profilé respectif 11. Chaque poutre 41 est réalisée par extrusion ou moulage d'un alliage d'aluminium ou d'un matériauplastique de synthèse.

Les poutres 41 s'étendent suivant la direction transversale Y, donc transversalement à la direction longitudinale X. Chaque poutre 41 repose sur des plateaux supérieurs 11.3 appartenant aux profilés 11 liés à deux ondes 3 communes. À cet effet, les profilés 11 sont agencé de sorte que les faces supérieures des plateaux supérieurs 11.3 sont substantiellement coplanaires.

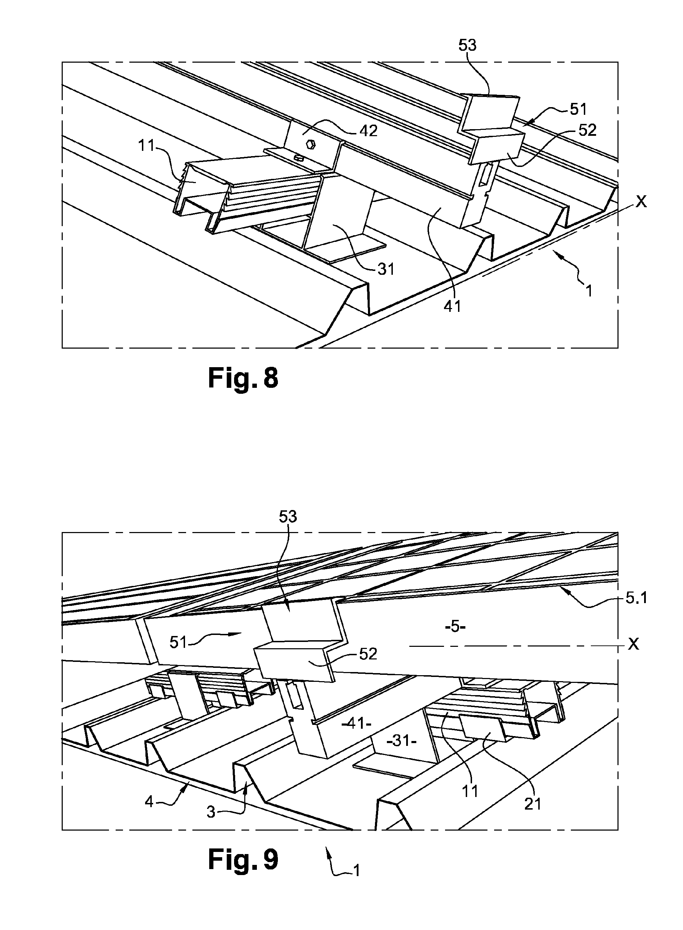

Comme le montrent les figures 8 et 9, l'ensemble modulaire 1 comprend en outre des organes de fixation terminaux 51 comprenant une partie de liaison 52 à la poutre 41 et une partie d'accrochage53 adaptée pour accrocher au moins un panneau solaire 5. La partie d'accrochage 53 forme une saillie plaquée sur un bord 5.1 d'un panneau solaire 5. Les organes de fixation terminaux 51 sont dits terminaux, car ils permettent la fixation d'un panneau solaire situé près d'un bord terminal du bac acier 2. Pour alléger la figure 8, les socles 21 n'y sont pas représentés

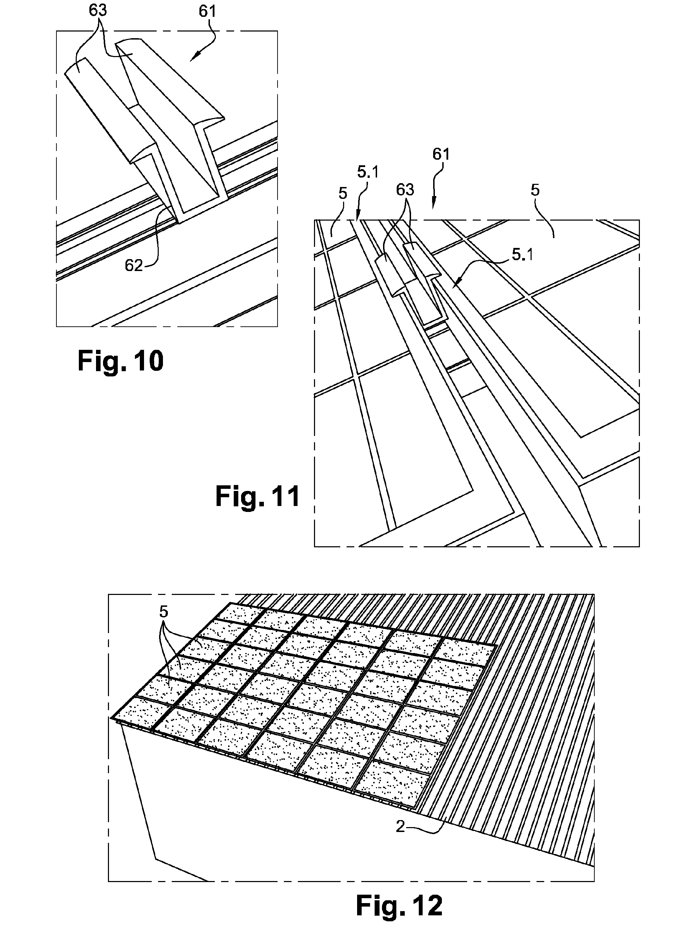

Comme le montrent les figures 10 et 11, l'ensemble modulaire 1 comprend en outre des organes de fixation intercalaires 61 comprenant une partie de liaison 62 à la poutre 41 et une partie d'accrochage 63 adaptée pour accrocher les bords 5.1 deux panneaux solaires 5 voisins. Les organes de fixation terminaux 61 sont dits intercalaires car ils s'intercalent entre des deux panneaux solaires 5 voisins tout en permettent leur fixation à une poutre 41.

La figure 12 illustre un champ de panneaux solaires formé de plusieurs panneaux solaires 5 liés à la toiture.

Selon des caractéristiques avantageuses mais facultatives de l'invention, prises isolément ou selon toute combinaison techniquement possibles :
- Un ensemble modulaire conforme à l'invention peut comprendre deux embases pour un profilé respectif, par exemple dans le cas où le creux d'ondes présente un ou deux bosselages et plusieurs surfaces globalement planes.

## Revendications

1. Ensemble modulaire (1), pour lier au moins un panneau solaire (5) à une toiture recouverte d'un bac acier (2) ayant des ondes (3) séparées, suivant une direction longitudinale (X), par des creux d'ondes (4) qui présentent une surface globalement plane (4.2), l'ensemble modulaire (1) comprenant :
- au moins un profilé (11) dont la longueur (L11) est supérieure à la distance usuelle (D3.3) entre deux ondes (3) successives, le profilé (11) présentant deux faces longitudinales (12, 13) ayant des orientations opposées et comprenant chacune :
- une rainure primaire (12.1, 13.1) s'étendant parallèlement à la direction longitudinale (X) et agencée près du bac acier (2) ; et
- une succession de plusieurs rainures secondaires (12.2, 13.2) s'étendant parallèlement à la direction longitudinale (X) et agencées à distance croissante du bac acier (2) ;
- au moins deux socles (21) adaptés pour être fixés sur deux ondes (3) respectives et successives, chaque socle (21) comportant au moins deux ailettes (22, 23) qui sont élastiquement déformables et qui s'étendent parallèlement à la direction longitudinale (X), chaque ailette (22, 23) comprenant au moins une languette primaire (22.1, 23.1) adaptée pour encliquetage élastique sur l'une desdites rainures primaires (12.1, 13.1) de façon à lier un profilé (11) respectif à chacun desdits socles (21) ; et
- au moins une embase (31) adaptée pour être positionnée sur un creux d'ondes (4), l'embase (31) comportant une semelle (31.1) agencée pour reposer sur le bac acier (2), l'embase (31) comportant au moins deux ailes (32, 33) qui sont élastiquement déformables et qui s'étendent parallèlement à la direction longitudinale (X), chaque aile (32, 33) comprenant au moins une languette secondaire (32.2, 33.2) adaptée pour encliquetage élastique sur l'une desdites rainures secondaires (12.2, 13.2) de façon à lier un profilé (11) respectif à une embase (31) respective.

2. Ensemble modulaire (1) selon la revendication 1, comprenant en outre :
- au moins deux poutres (41) s'étendant transversalement à la direction longitudinale (X) ; et
- plusieurs équerres de fixation (42) adaptées chacune pour fixer une poutre respective (41) à un profilé respectif (11).

3. Ensemble modulaire (1) selon l'une des revendications précédentes, comprenant en outre des organes de fixation (51, 61) comprenant une partie de liaison (52, 62) à une poutre respective (41) et une partie d'accrochage (53, 63) adaptée pour accrocher au moins un panneau solaire (5).

4. Ensemble modulaire (1) selon l'une des revendications précédentes, dans lequel chaque languette primaire (22.1, 23.1) est agencée pour coopérer avec une rainure primaire (12.1, 13.1) de sorte que le profilé (11) respectif transmet au socle respectif (21) des efforts (F21) exercés dans un sens sensiblement ascendant et sur au moins un panneau solaire (5).

5. Ensemble modulaire (1) selon l'une des revendications précédentes, dans lequel chaque languette secondaire (32.2, 33.2) est agencée pour coopérer avec une rainure secondaire (12.2, 13.2) de sorte que le profilé respectif (11) transmet à l'embase (31) des efforts (F31) exercés dans un sens sensiblement descendant et sur au moins un panneau solaire (5).

6. Ensemble modulaire (1) selon l'une des revendications précédentes, comprenant deux embases (31) pour un profilé respectif (11).

7. Ensemble modulaire (1) selon l'une des revendications 1 à 5, comprenant une embase (31) pour un profilé respectif (11).

8. Ensemble modulaire (1) selon l'une des revendications précédentes, dans lequel chaque languette secondaire (32.2, 33.2) est disposée à l'extrémité de chaque aile (32, 33).

9. Ensemble modulaire (1) selon l'une des revendications précédentes, dans lequel les deux faces longitudinales (12, 13) opposées d'un profilé (11) sont parallèles et orientées vers l'extérieur du profilé (11).

10. Ensemble modulaire (1) selon l'une des revendications précédentes, dans lequel la succession de rainures secondaires (12.2, 13.2) comprend au moins quatre rainures secondaires (12.2, 13.2) juxtaposées.

11. Ensemble modulaire (1) selon l'une des revendications précédentes, dans lequel chaque rainure secondaire (12.2, 13.2) a une section transversale triangulaire, la succession des rainures secondaires (12.2, 13.2) formant des dents de scie.

12. Ensemble modulaire (1) selon l'une des revendications précédentes, dans lequel chaque socle (21) est un tronçon de profilé (11) à section transversale globalement en U et présentant un plateau (21.2), le profilé (11) comportant des patins (11.1) adaptés pour reposer sur le plateau (21.2).

13. Ensemble modulaire (1) selon l'une des revendications précédentes, dans lequel les languettes primaires (22.1, 23.1) s'étendent sur une partie substantielle, de préférence sur la totalité, de la longueur (L21) d'un socle respectif (21), et les languettes secondaires (32.2, 33.2) s'étendent sur une partie substantielle, de préférence sur la totalité, de la longueur (L31) d'une embase respective (31).

14. Ensemble modulaire (1) selon l'une des revendications précédentes, dans lequel le profilé (11) a une section transversale creuse et globalement rectangulaire.

15. Procédé, pour installer un ensemble modulaire (1) selon l'une des revendications précédentes sur une toiture recouverte d'un bac acier (2) ayant des ondes (3) séparées, suivant une direction longitudinale (X), par des creux d'ondes (4) qui présentent une surface globalement plane (4.2), le procédé comprenant les étapes :
- fixer les deux socles (21) sur deux ondes (3) respectives et successives ;
- positionner au moins une embase (31) sur une surface globalement plane (4.2) d'un creux d'ondes (4), la semelle (31.1) reposant sur le bac acier (2) ;
- lier un profilé respectif (11) à chacun desdits socles (21) ; et
- lier le profilé (11) à une embase respective (31).

16. Procédé selon la revendication 15, comprenant en outre les étapes :
- ôter des vis de fixation du bac acier (2) d'une panne sous-jacente ;
- fixer les socles (21) sur deux ondes respectives (3) au moyen de vis de réparation et, de préférence, d'une rondelle élastique (3.1) disposées aux emplacements des vis de fixation ;
- positionner chaque embase respective (31) dans un creux d'ondes ; et
- fixer une poutre respective (41) transversalement à la direction longitudinale (X) au moyen de plusieurs équerres de fixation (42).
